# DEMANDE DE BREVET EUROPEEN

(11) **EP 0 542 621 A1**
(43) Date de publication de la demande: **19.05.1993**
(21) Numéro de dépôt: 92403045.5
(22) Date de dépôt: 12.11.1992
(51) Int. Cl.: B60K 28/06, B60R 25/04

(54) **Dispositifs de sécurité anti-alcool notamment pour l'équipement de véhicules**

(30) Priorité: 12.11.1991 FR 9113871
(71) Demandeur: BM SECURITE SARL, F-78430 Louveciennes (FR)
(72) Inventeur: Borne, Jean-Philippe, F-78430 Louveciennes (FR); Lacal, Franck, F-75004 Paris (FR); Martin, Joaquim, F-77200 Torcy (FR)

(57) **Abrégé**

Les dispositifs selon l'invention comprennent essentiellement un boitier de contrôle (1) et un capteur de mesure (2).Le capteur de mesure détecte la teneur d'alcool dans l'haleine de la personne testée afin d'en déduire son taux d'alcoolémie.Des moyens (12) sont prévus dans le boitier de contrôle pour commander des éléments actionneurs (3) en fonction de la valeur détectée du taux d'alcoolémie.Ces dispositifs se caractérisent principalement d'une part par la présence de moyens d'inhibition (1200,1201) afin d'autoriser une désactivation par exemple en cas d'urgence, et d'autre part par une réponse graduée en fonction de l'état de la personne.Ainsi selon l'état de la personne, un dispositif selon l'invention autorise une utilisation normale de la machine sous surveillance, une utilisation limitée, ou interdit toute utilisation de la machine.

## Description

La présente invention concerne des dispositifs de sécurité anti-alcool notamment pour des véhicules automobiles, mais pas exclusivement. Les dispositifs selon l'invention sont applicables pour tout appareil dont la manipulation requiert une personne ayant un bon usage de ses capacités. Des dispositifs selon la technique antérieure sont divulgués par des documents de brevet US-4039852 et FR 2619419.

Force est de constater que ces dispositifs, globalement connus depuis une vingtaine d'années, n'ont pas encore aujourd'hui d'utilisation pratique à grande échelle, malgré l'évidence de leur l'intérêt.La raison de cette situation est que la technique antérieure est d'utilisation très contraignante et n'offre aucune souplesse. Or, à défaut d'une législation en imposant l'usage, l'installation de tels dispositifs de sécurité passe par la bonne volonté d'utilisateurs qui d'eux-mêmes acceptent une limitation de leurs libertés individuelles.

Dans les dispositifs selon les documents cités ci-dessus, différents inconvénients sont apparents et compromettent l'acceptation des utilisateurs.

Ainsi, par exemple pour des applications à des véhicules automobiles, aucune disposition n'est prévue pour outrepasser la procédure de test en cas de calage du moteur, d'impératif d'urgence, ou .pour une intervention mécanique sur le véhicule.

Par ailleurs, la réponse de ces dispositifs est de type "tout ou rien", c'est à dire qu'elle consiste simplement en une autorisation ou un refus formel de prendre le contrôle du véhicule.

D'autres désagréments peuvent être signalés. Ainsi, pour un dispositif agissant au niveau du circuit d'allumage, tel que celui décrit par le document FR 2619419, l'utilisateur, non averti de la présence du dispositif, déchargera la batterie d'accumulateurs du véhicule après plusieurs tentatives de démarrage infructueuses.

Une conception plus élaborée devrait prévoir des éléments actionneurs combinés, par exemple, pour couper le démarreur du moteur conjointement au circuit d'allumage.

Un autre avantage induit par la mise en oeuvre d'actionneurs combinés est d'avoir un effet dissuasif lorsque l'utilisateur est tenté d'intervenir sur le dispositif afin de le désactiver à la suite d'un test négatif.En effet, l'intervention est alors bien plus complexe que le simple shunt d'un élément actionneur unique.

La présente invention vise à fournir des dispositifs de sécurité anti-alcool perfectionnés, conçus pour autoriser une certaine souplesse d'utilisation, et ne présentant pas les inconvénients de la technique antérieure.

A cette fin, un dispositif de sécurité anti-alcool pour l'équipement de machines telles que véhicules, comprenant des moyens pour détecter un niveau d'intoxication d'un utilisateur, et des moyens pour contrôler l'utilisation d'une machine sous surveillance dans le cas ou le niveau détecté est supérieur à un seuil prédéterminé, caractérisé en ce qu'il comprend des moyens pour autoriser une utilisation de ladite machine quel que soit ledit niveau détecté lorsque des conditions déterminées sont satisfaites.

Lesdits moyens pour autoriser sont par exemple une clé ou un code numérique d'inhibition transmis à l'utilisateur, ou une touche-contact d'accès libre pour une inhibition d'urgence mais néammoins contrôlée dans sa fréquence d'utilisation.

Selon d'autres caractéristiques, les moyens pour contrôler comprennent des moyens pour graduer l'emprise limitative du dispositif sur le fonctionnement de la machine et cela en fonction du niveau d'intoxication de l'utilisateur.

Par ailleurs, les moyens pour contrôler peuvent également comprendre plusieurs moyens actionneurs pour contrôler le fonctionnement de la machine à travers au moins.un élément de maitrise dudit fonctionnement.

D'autres caractéristiques et avantages de l'invention apparaitront à la lecture de la description suivante de plusieurs réalisations préférées des dispositifs de sécurité anti-alcool selon l'invention en référence aux dessins annexés correspondants, dans lesquels:
- la figure 1 est un bloc-diagramme général d'un type de réalisation des dispositifs de sécurité selon l'invention pour des véhicules automobiles;
- la figure 2 montre en détail un circuit de contrôle inclus dans des dispositifs selon l'invention; et
- la figure 3 montre différents cas d'utilisation d'éléments actionneurs pour maitriser le fonctionnement d'un véhicule automobile.

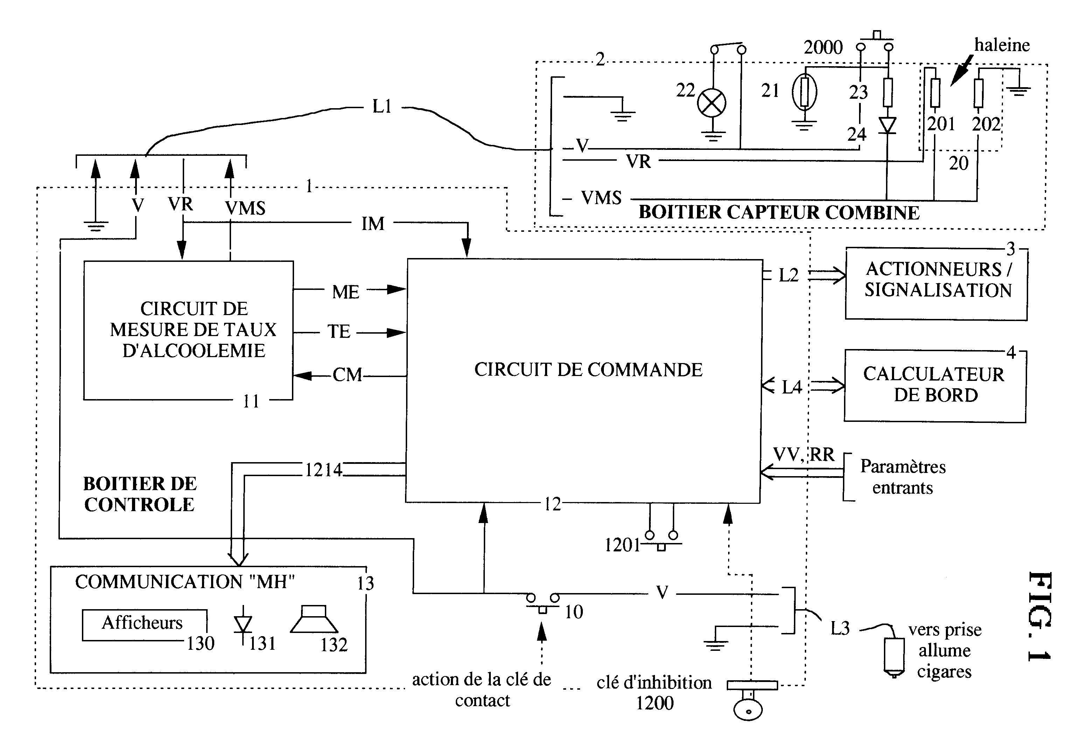

En référence à la figure 1, un dispositif de sécurité selon l'invention comprend essentiellement un boitier de contrôle 1 et un boitier capteur combiné 2.

Le boitier de contrôle 1 est relié par des liaisons L1, L2, L3 et L4 respectivement au boitier capteur 2, à des éléments actionneurs et de signalisation 3, à une tension d'alimentation V fournie par exemple à travers une prise allume-cigare du véhicule et éventuellement à un calculateur de bord 4. Par ailleurs, le dispositif de sécurité reçoit des paramètres entrants tels que la vitesse du véhicule VV et le régime de rotation du moteur RR.

Les liaisons L1 et L2 sont ici des liaisons filaires classiques. Selon une variante de réalisation du dispositif, il est fait appel à des liaisons non filaires telles que par exemple de types infrarouges et hertziennes. Le boitier de contrôle 1 est constitué essentiellement d'un circuit de mesure de taux d'alcoolémie 11, d'un circuit de commande 12 et d'éléments de communication "machine - homme" (M.H.) 13.

Le circuit de mesure 11 est un circuit électronique connu de l'homme de l'art. Le principe général d'un tel circuit est divulgué par exemple par le brevet U.S. 4039852 commenté dans le préambule de la présente demande.

Un capteur 20, par exemple de type à semi-conducteur,(cf. boitier capteur combiné 2) présente une sensibilité à la teneur en alcool dans l'air ambiant. La personne à tester est amenée à souffler un certain volume d'air en direction du capteur. La variation mesurée est sensiblement proportionelle à la teneur d'alcool dans l'haleine de la personne, elle-même sensiblement proportionelle au taux d'alcoolémie sanguin.

Le circuit de mesure 11 communique avec le circuit de contrôle 12 à travers trois signaux CM, TE et ME, respectivement un signal d'activation de mesure, un signal indicateur de mesure en cours et un signal de mesure ME.

Le circuit de commande 12 initialise une mesure à la suite de la réception d'une impulsion de demande de mesure IM produite au moyen d'une touche-contact 2000 prévue dans le boitier capteur combiné 2.

Le signal CM est actif à un état logique "1", qui est positionné par le circuit de commande 12 consécutivement à la réception de l'impulsion IM. La prise en compte du signal d'activation CM est signalée par le circuit de mesure 11 au moyen de la montée à l'état logique "1" du signal TE. La montée de "0" à "1" du signal TE indique le début de la mesure. La descente de "1" à "0" du signal TE indique la fin de la mesure et la présence d'un signal de mesure ME valide à une entrée correspondante du circuit de commande 12. Après lecture du signal de mesure ME, le signal d'activation CM commute à un état "0" et le circuit de mesure 11 vient à un état de repos.et est donc prêt pour une mesure sur sollicitation à travers la touche-contact 2000.Ainsi plusieurs mesures sont possibles par un même utilisateur ou des utilisateurs différents.

Pendant toute la durée de la mesure, une tension de mesure stabilisée VMS est fournie au capteur 20 par le circuit de mesure 11. La tension VMS alimente dans le capteur 20 un élément de mesure 201 sensible à l'alcool et un filament de chauffage 202. Le filament de chauffage 202 a d'une part pour fonction d'amener l'environnement proche de l'élément 201 à une température propice à la mesure, et d'autre part de provoquer l'élimination, par évaporation, d'éventuels résidus d'alcool et de vapeur d'eau, consécutifs à une mesure précédente. Une durée de chauffe précède la prise en compte d'un signal de variation VR produit par le capteur 20.

Le circuit de commande 12 est décrit en détail plus loin dans la description. De manière générale, le circuit 12 est prévu pour deux modes de fonctionnement.

Selon un premier. mode, le dispositif de sécurité est parfaitement autonome et contrôle son propre fonctionnement en tenant compte de commandes de l'utilisateur, de son propre état et de celui du véhicule, ainsi que du résultat de mesure d'alcoolémie et des paramètres entrants VV et RR fournis par le véhicule.

Selon un second mode, le dispositif de sécurité est asservi au calculateur de bord 4 du véhicule, selon une relation de type maitre - esclave. Ce type de fonctionnement est envisageable avec des véhicules de dernière génération à calculateur central connecté à une multitude de capteurs et à des moyens perfectionnés de contrôle de la motorisation et des éléments de sécurité (freinage, allumage, carburation, injection ...). Dans ce dernier cas, le dispositif de sécurité est un élément à part entière de l'équipement du véhicule. Certaines des fonctionnalités du dispositif de sécurité telles que par exemple une comparaison de la mesure à des seuils prédéterminés ou une surveillance de la conduite (cf. description ultérieure du circuit 12) peuvent dans certains cas être prises en charge par le calculateur de bord 4. Le contrôle d'éléments actionneurs et de signalisation 3 est alors également réalisable à travers lesdits moyens de contrôle accessibles au calculateur 4.

Le premier mode de fonctionement est proritairement décrit dans la présente demande. Le second mode de fonctionement découle de manière évidente pour l'homme de l'art à partir des informations qui sont ici divulguées.

Le circuit de commande 12 reçoit une tension d'alimentation fournie par une batterie d'accumulateurs du véhicule par exemple à travers la prise dite allume-cigare. La tension V est appliquée au dispositif de sécurité à travers un contact 10 commandé par la clé de contact du véhicule.

Des moyens d'inhibition du dispositif de sécurité sous la forme d'une clé 1200 et d'une touche-contact d'inhibition d'urgence 1201, équipent le boitier 1 et contrôlent le circuit de commande 12.

Selon une variante de réalisation, la clé 1200 et/ou la touche-contact 1201 sont remplacés par des codes alphanumériques saisis au moyen d'un clavier.

Lesdits moyens d'inhibition désactivent le dispositif de sécurité du véhicule et autorisent un fonctionement classique du véhicule. L'activation de la clé 1200 commande une inhibition dont la durée égale celle de l'activation de la clé. La touche-contact d'urgence 1201 n'autorise qu'une inhibition temporaire de l'ordre de cinq minutes.

Les moyens de communication "MH" 13 sont reliés au circuit de commande 12 à travers une liaison 1214, et comprennent notamment des afficheurs 130 par exemple de type à cristaux liquides, des diodes électroluminescentes 131 et un buzzer ou haut-parleur 132. Des messages en clair sont communiqués à travers les afficheurs 130 ou des moyens de synthèse vocale (non représentés), comme par exemple la mesure du taux d'alccolémie et l'état du dispositif de test:"*votre taux d'alcoolémie est de ...*", "*veuillez souffler dans le capteur* ", "*mesure en cours*", "*vous n'êtes pas en état de conduire*", "*veuillez vous reposer quelques instants avant de recommencer un test*", "*vous pouvez conduire, mais attention votre vitesse est limitée*", "*l'alimentation est coupée, veuillez rebrancher la prise allume-cigare*", "*prêt pour test*", *etc ...*

Les diodes DEL 131 et le buzzer 132 optimisent les performances de communication du dispositif de sécurité en utilisant à bon escient des signalisations lumineuses colorées, stables et clignotantes, et des signaux sonores de différentes fréquences et intensités, et de durées variables.

Selon la réalisation qui est ici décrite, le boitier capteur 2 est un combiné incluant, outre le capteur 20, un filament allume-cigare 21 et une lampe veilleuse 22. Ces deux éléments de confort 21, et 22 ont pour fonction respectivement d'éviter au conducteur le débranchement du dispositif de sécurité afin d'utiliser l'allume-cigare, et de faciliter la manipulation du dispositif et la recherche d'objets dans l'habitacle du véhicule, comme par exemple la clé d'inhibition 1200.

La touche-contact 2000 est utilisée pour produire l'impulsion de commande de mesure IM et pour alimenter le filament allume-cigare 21.La tension est fournie au boitier capteur 2 pour alimenter le filament allume-cigare 21 et la lampe veilleuse 22, et pour produire l'impulsion IM.

Un appui bref sur la touche-contact 2000 est détecté par le circuit 12 et commande une mesure. Un appui prolongé n'est pas pris en compte par le circuit 12 et alimente le filament allume-cigare 21 avec la tension V. Une résistance de valeur élevée 23 est prévue afin de limiter à une valeur très faible un courant circulant entre les tensions V et VMS en cas d'appui sur la touche contact 2000 en cours de mesure, lorsque la tension VMS est présente. Une diode 24 est disposée afin d'interdire tout passage de courant entre la tension VMS et une tension de masse, à travers le filament allume-cigare 21.

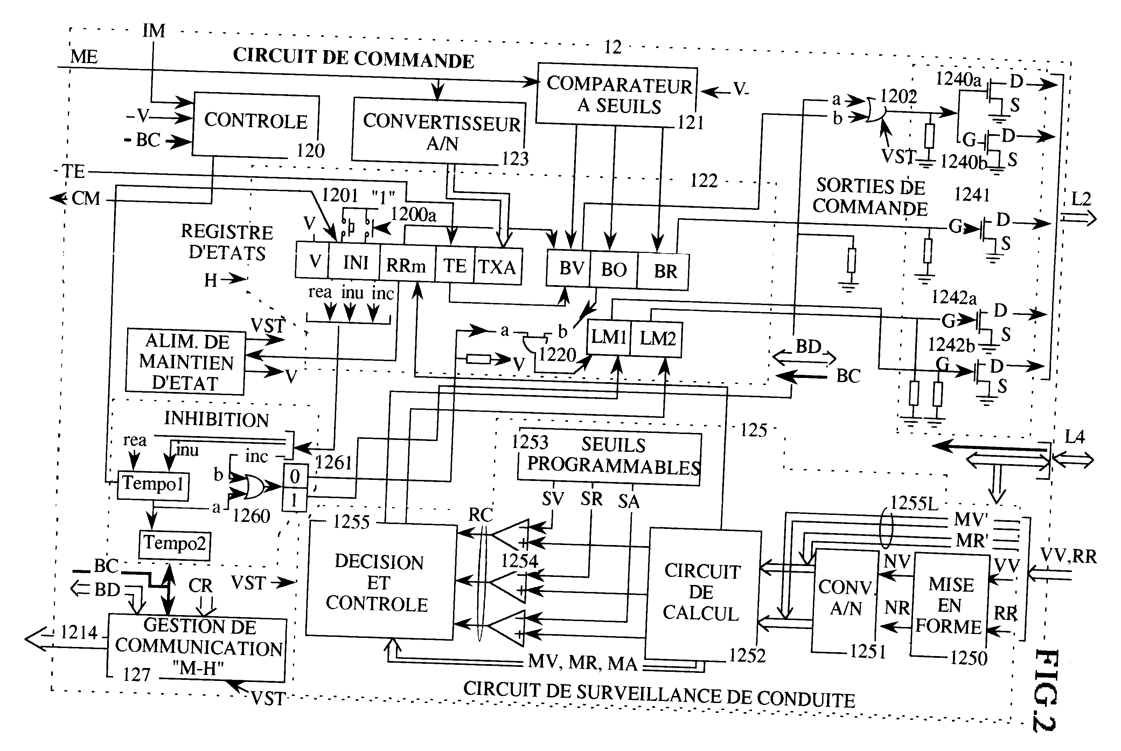

En référence à la Fig. 2, le circuit de commande 12 comprend essentiellement un circuit de contrôle de mesure 120, un comparateur à seuils 121, un registre d'états 122, un convertisseur analogique / numérique 123, un circuit de sorties de commande 124, un circuit de surveillance de conduite 125, un circuit d'inhibition 126, une interface de communication "MH" 127, et une alimentation temporisée de maintien d'état 128.

Le circuit de contrôle de mesure 120 détecte l'impulsion IM et produit en sortie le signal de commande de mesure CM destiné au circuit de mesure 11. De manière classique pour l'homme de l'art, un tel circuit 120 est réalisé, par exemple ici, à l'aide de portes logiques et bascules.

Le comparateur à seuils 121 réalise deux comparaisons sur le signal de mesure ME, respectivement par rapport à des seuils de taux d'alcoolémie SAmin et SAmax. Le seuil SAmin correspond par exemple à un taux d'alcoolémie TXA égal à 0,5 gramme. Le seuil SAmax correspond par exemple à un taux TXA égal à 0,8 gramme.

Le comparateur 121 délivre en sortie trois bits de résultat BV, BO et BR dont des états logiques "1" correspondent respectivement à des mesures "*dans le vert*", "*dans l'orange*" et "*dans le rouge*".

Le bit BV = "1" signale une alcoolémie inférieure à 0,5 gramme: le conducteur dispose de toutes ses facultés et peut conduire le 'véhicule.Le groupe des trois bits (BV, BO, BR) ne peut prendre que les trois combinaisons d'états suivants: ("1", "0", "0"), ("0", "1", "0"), ("0", "0", "1").

Le bit BO = "1" signale une alcoolémie comprise entre 0,5 et 0,8 gramme: les facultés du conducteur sont sensiblement altérées, neammoins il peut conduire le véhicule, avec prudence. Le bit BR = "1" signale une alcoolémie supérieure à 0,8 gramme: le conducteur n'est pas en état de conduire le véhicule.

Le dispositif de sécurité permet donc une graduation dans son emprise limitative sur le fonctionnement du véhicule en fonction de l'alcoolémie du conducteur.

Cette décomposition en trois niveaux est arbitraire et correspond à l'exemple de réalisation qui est ici décrit. Bien évidemment, d'autres décompositions, notamment plus fines sont, possibles et restent dans le cadre de la présente invention.

Le registre d'états 122 est l'élément essentiel du circuit de commande 12. Dans des cellules correspondantes, le registre d'états 122 mémorise les trois bits BV, BO, BR fournis par le comparateur 121, deux bits de limitation LM1 et LM2, une valeur numérique TXA du taux d'alcoolémie fournie par le convertisseur 123, l'état courant du signal TE, l'état courant d'un signal RRm indiquant à l'état "1" que le moteur du véhicule est en marche, un mot d'inhibition INI, et l'état courant de la tension d'alimentation V ("1" si la tension "V" est présente et "0" si elle est absente).

Le fonctionnement du registre d'états 122 est synchronisé par un signal d'horloge H de fréquence élevée afin d'assurer une maitrise parfaite du contenu du registre d'états 122 et d'éviter tout phénomène transitoire. Les écritures et lectures dans les cellules du registre 122 interviennent sur des fronts du signal d'horloge H. L'écriture des bits BV, BO et BR dans les cellules correspondantes du registre 122 demande également une commutation du signal TE de l'état "1" à l'état "0" (fin de mesure) et un signal de régime de rotation moteur RRm à l'état "0".En d'autres termes,comme cela apparaîtra plus clairement par la suite, il est impossible de modifier l'état des bits BV, BO et BR, et donc le niveau d'emprise du dispositif sur le fonctionnement du véhicule, tant que le véhicule est en marche (RRm="1")

Selon l'exemple de réalisation qui est ici décrit, un état "1" du bit BV (alcoolémie inférieure à 0,5 gramme) autorise le conducteur à prendre le contrôle normal du véhicule. Un état "1" du bit BO (alcoolémie comprise entre 0,5 et 0,8 gramme) autorise également le conducteur à prendre le contrôle du véhicule, mais ledit conducteur est "sous surveillance" (cf. circuit de surveillance de conduite 125) et le dispositif peut limiter autoritairement par exemple la vitesse du véhicule ou prendre d'autres types de mesures si la conduite est jugée peu raisonnable. Un état "1" du bit BR interdit toute conduite du véhicule et le conducteur est invité à se reposer.

Les bits BV, BO, BR et LM1, LM2 commandent des états passants ou bloqués de transistors, par exemple de type FET ou MOS, inclus dans le circuit de sorties de commande 124. Des transistors 1240a et 1240b sont commandés par le bit BV contenu dans le registre 122 à travers une porte logique OU 1202. Un transistor 1241 est commandé directement par le bit BR contenu dans le registre 122. Des transistors 1242a et 1242b sont commandés directement par les bits LM1 et LM2 contenus dans le registre 122. Un état logique "1" appliqué à une électrode de grille G d'un des transistors du circuit 124 commande un état passant autorisant le passage d'un courant d'une électrode de drain D vers une électrode de source S dudit transistor. Les électrodes de source S des transistors sont par exemple reliées à la masse, afin de minimiser le cablage filaire.

Les transistors 1240a et 1240b (BV = "1") commandent des éléments actionneurs d'autorisation de conduite (cf. figure 1, repère 3), par exemple activation d'un relais pour permettre l'alimentation du démarreur et/ou du circuit d'allumage du véhicule.

Le transistor 1241 (BR = "1") peut commander un élément de signalisation extérieure tel que par exemple le clignotement des feux de détresse ou une signalisation spécifique de type légal.

Les transistors 1242a et 1242b (BO = "1", LM1 = "1" et LM2 = "1") commandent des actionneurs de type limiteur, par exemple désactivation du système d'allumage ou fermeture d'électrovanne d'arrivée de carburant au delà d'une vitesse prédéterminée, et/ou activation de signalisation telle que feux de détresse afin de prévenir les autres automobilistes d'un danger.

Le circuit de surveillance de conduite 125 comprend essentiellement un circuit de mise en forme 1250, un convertisseur analogique/numérique 1251, un circuit de calcul de paramètres moyens 1252, un circuit de valeurs de seuils programmables 1253, des circuits de comparaison 1254, et un circuit logique de décision et de contrôle de limitation 1255.

Le circuit de mise en forme 1250 reçoit les signaux VV et RR, respectivememt de vitesse véhicule et de régime de rotation moteur. Le signal RR peut par exemple dans la plupart des cas être prélevé au niveau de la prise dite "W" de l'alternateur ou au niveau du compte-tours du tableau de bord. Le signal VV est également accessible au niveau du tableau de bord du véhicule.

Le circuit 1250 met en forme les signaux VV et RR de manière à obtenir deux niveaux continus correspondants, respectivement NV et NR, qui sont appliqués en entrée du convertisseur 1251. Le convertisseur 1251 délivre deux mots numériques MV et MR correspondant respectivement aux niveaux NV et NR. Les mots MV et MR sont fournis par un circuit de calcul de paramètres moyens 1252.

Des liaisons numériques 1255L sont également prévues pour le circuit 1252. Ces liaisons sont utilisées dans la cas où des mots numériques MV' et MR', analogues aux mots MV et MR respectivement, sont directement disponibles dans le véhicule. Les circuits 1250 et 1251 ne sont alors pas utilisés.

Le circuit de calcul de paramètres moyens 1252 réalise différents calculs à partir des mots MV et MR. Les mots MV sont dérivés (dMV/dt) afin de déterminer des mots MA représentatifs de l'accélération instantanée du véhicule. Les mots MV et MR sont également intégrés afin de calculer des valeurs moyennes MMV et MMR sur des intervalles de temps prédéterminés. Le circuit 1252 délivre également en sortie le signal RRm et les mots MV, MR, MA non moyennés.

Les mots MMV, MMR et MA définissent un profil de conduite et sont comparés respectivement à des valeurs de seuils SV, SR, et SA fournies par le circuit de valeurs de seuils programmables 1253.

Les valeurs de seuils sont programmées à la mise en service de l'appareil, par exemple en fonction d'un test visant à cerner des attitudes de conduite de la personne concernée, ou en fonction de données statistiques; ces valeurs peuvent également être modifiées par le calculateur de bord 4 à travers la liaison L4.

La comparaison entre les mots MMV, MMR et MA et les valeurs de seuil SV, SR et SA est réalisée par des moyens de comparaison 1254. Un mot RC, résultat de comparaison, est délivré en sortie par les moyens 1254.

Le circuit logique de décision et de contrôle de limitation 1255 reçoit en entrée d'une part le mot RC, et d'autre part les mots MV, MR et MA fournis par le circuit de calcul 1252. Le circuit 1255 détermine l'état des deux bits de limitation LM1 et LM2 à la suite d'un traitement de type logique, essentiellement. Les paramètres instantanés MV, MR et MA du véhicule sont pris en compte par le circuit 1255 pour sélectionner l'élément actionneur de limitation à activer; l'élément sélectionné étant celui qui garantira au mieux un comportement sain du véhicule. Ainsi, par exemple, le circuit 1255 décide entre une suspension brève de l'allumage et une suspension brève de l'alimentation du moteur, et cela en tenant compte des paramètres instantanés MV, MR, MA. Le maintien d'une décision de limitation reste tributaire du résultat RC de la comparaison et des valeurs desdits paramètres instantanés.

Selon une réalisation préférée, le circuit 1255 réalise un asservissement de type "tout ou rien" et comprend des comparateurs à hystérésis. Plusieurs types de circuits logiques de décision 1255 sont réalisables par l'homme de l'art, en fonction des caractéristiques des véhicules qui sont considérés et de contraintes spécifiques.Selon une autre variante, le signal de régime de rotation moteur RRm est remplacé par un signal fourni par un détecteur de vibration qui peut être logé dans le boitier de contrôle 1. En référence à nouveau au registre d'états 122, l'écriture des bits BV, BO et BR dans les cellules mémoires correspondantes est controlée non seulement par l'état du signal TE mais également par l'état du signal RRm. En effet,comme signalé plus haut dans les pages ci-dessus, le signal RRm à l'état "1" interdit toute écriture des bits BV, BO et BR dans le registre 122. Cette disposition a pour but, d'une part, d'éviter toute modification intempestive des sorties de commande 124 et notamment des blocages des transistors 1240a et 1240b, lorsque le véhicule est en marche, et d'autre part d'autoriser néanmoins des mesures lorsque le véhicule est en marche par exemple à l'intention de passagers voulant mesurer leurs taux d'alcoolémie.

Le circuit d'inhibition 126 traite des demandes d'inhibition à travers des actions sur la touche-contact d'inhibition d'urgence 1201 et sur la clé d'inhibition 1200. Un contact 1200a montré à la figure 2 est actionné par la clé 1200.

Un appui sur la touche-contact 1201 a pour effet de positionner à l'état "1" dans le registre 122, un bit INU du mot INI, pendant une durée sensiblement égale à la durée de l'appui. L'impulsion à l'état "1" du bit INU commande l'armement d'une temporisation TEMPO 1 pour une durée de l'ordre de cinq minutes. Pendant cette durée de cinq minutes, une entrée 1260a d'une porte OU, 1260, est à l'état "1" et consécutivement des états "0" et "1" contenus dans une mémoire cablée 1261 sont appliqués à une première entrée 1220a d'une porte ET, 1220, et à une première entrée 1202a de la porte OU 1202, respectivement.

La porte ET 1220 reçoit à une seconde entrée 1220b, le bit BO contenu dans le registre 122. Une sortie de la porte 1220 commande à un état "1" la sortie des bits LM1 et LM2 des cellules correspondantes du registre 122. L'entrée 1220a est reliée à la tension V à travers une résistance de manière à déterminer l'entrée 1220a à un état "1" lorsque la mémoire 1261 n'est pas activée par la porte 1260. L'état de la sortie de la porte 1220 dépend alors uniquement de l'état du bit BO contenu dans le registre 122. L'état "0" de la mémoire cablée 1261 appliqué à l'entrée 1220a interdit donc la sortie des bits LM1 et LM2 du registre 122 et les transistors 1242a et 1242b sont bloqués. Aucune limitation n'est possible.

L'état "1" de la mémoire cablée 1261 force la sortie de la porte OU, 1202, à l'état "1". Les transistors 1240a et 1240b sont passants et autorisent la conduite. Lorsque la mémoire 1261 n'est pas activée, une résistance détermine un état "0" à l'entrée 1202a et l'état de la sortie de la porte 1202 est égal à l'état du bit BV appliqué à une seconde entrée 1202b de la porte 1202.

Au terme de la temporisation TEMPO 1 de cinq minutes, une seconde temporisation TEMPO 2 est activée. La temporisation TEMPO 2 est par exemple de 24 heures. La temporisation TEMPO 2 est prévue pour le ré-armement de la temporisation TEMPO 1. A l'issue de la temporisation TEMPO 2, un bit REA est écrit à "1" dans le registre 122. Le bit REA commande sur un front montant le ré-armement de la temporisation TEMPO 1.

L'action de la clé d'inhibition 1200 commande l'écriture à l'état "1" d'un bit INC dans le registre 122, à travers le contact 1200a. Le bit INC est appliqué dans le circuit d'inhibition 126 à une entrée 1260b de la porte OU 1260. Le bit INC agit alors de manière analogue au bit INU de manière à inhiber toute action du dispositif de sécurité sur le véhicule. Le bit INC est opérationnel tant que la clé 1200 reste activée.

Il convient de noter que la mesure est toujours possible quand le dispositif est en état d'inhibition. Par ailleurs, la temporisation TEMPO 2 interdit un détournement, par appuis successifs, de la fonction de la touche-contact 1201. La touche-contact doit en effet rester un recours d'urgence, par exemple pour permettre une manoeuvre du véhicule telle que déplacement de courte distance d'un lieu de stationement à un autre.

L'interface de gestion de communication "MH" 127 reçoit en entrée la totalité du contenu CR du registre 122. Des moyens classiques sont prévus dans l'interface 127 pour décoder le contenu CR. Différents messages correspondants aux différents états possibles du dispositif, sont mémorisés dans des registres internes de l'interface 127 pour être transmis vers les moyens de communication "MH" 13 (Fig.1), en fonction du décodage du contenu CR. Ainsi, par exemple une coupure de l'alimentation V, suite à une déconnexion de la liaison LS (prise allume cigare) est signalée par un état "0" du bit V dans le registre 122. La détection du bit V = "0" par l'interface 127 commande l'affichage d'un message du type "*rebranchez l'alimentation*".

L'alimentation temporisée de maintien d'état 128 assure une sauvegarde de l'état du dispositif, cette sauvegarde est 126 et à l'interface 127. Des moyens sont prévus dans chacun des éléments cités ci-dessus afin de permettre une prise de contrôle totale du dispositif de sécurité par le calculateur de bord 4.

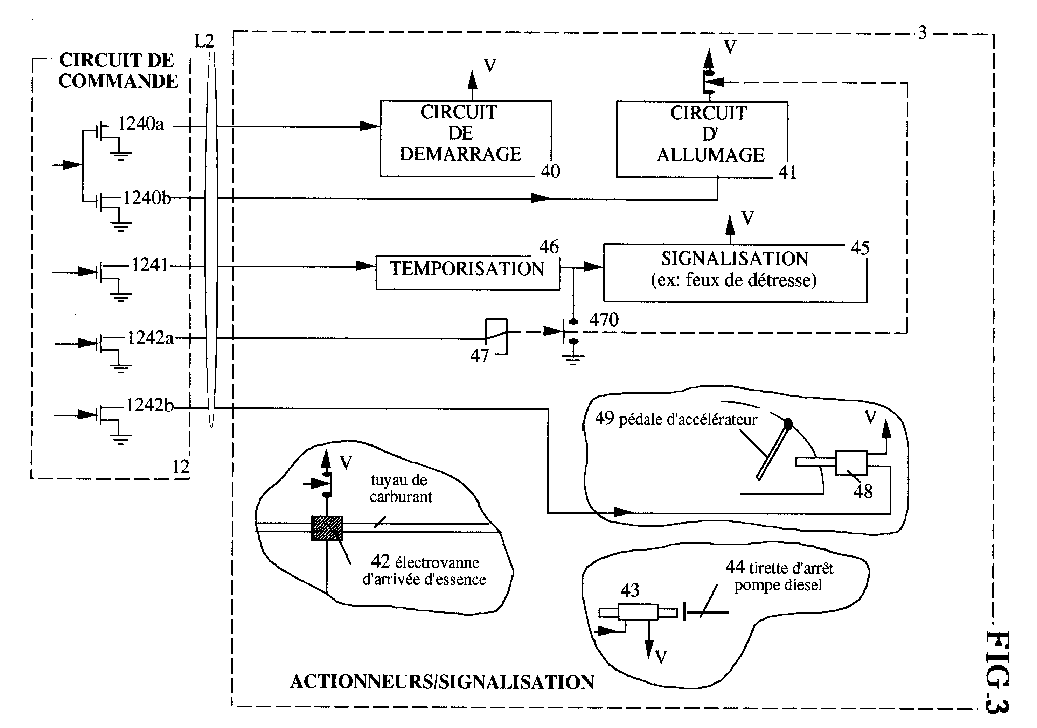

En référence à la figure 3, différents moyens actionneurs sont envisageables pour interdire/autoriser la conduite du véhicule (BV) et pour limiter son utilisation (BO).Les éléments actionneurs interviennent sur des éléments de maitrise de fonctionnement du véhicule tels que par exemple le circuit d'allumage, de démarrage, d'alimentation en carburant, et la pédale d'accélération.

Ainsi, par exemple, le circuit de démarrage 40 du véhicule est alimenté à travers le transistor 1240a comme montré à la figure 3. Le moteur du véhicule ne peut donc être démarré que si le bit BV = "1". De manière analogue, l'alimentation du circuit 41 est contrôlée, par exemple, à travers le transistor 1240b. De préférence, une coupure du circuit d'allumage 41 uniquement est à proscrire;en effet il convient également dans ce dernier cas de couper conjointement le circuit de démarrage de manière à éviter une décharge de la batterie d'accumulateurs du véhicule due, par exemple, à un conducteur non informé de la présence du dispositif de sécurité. La coupure du circuit d'allumage n'est envisageable que pour les moteurs à essence et non les moteurs Diesel, bien entendu.

Une autre solution est de disposer une électrovanne 42 au niveau de l'arrivée du carburant . Cette solution est valable pour les moteurs à essence et les moteurs Diesel de voitures de tourisme. Dans le cas de gros moteurs Diesel, un actionneur à solénoïde 43 est prévu afin de manoeuvrer une tirette d'arrêt de pompe d'injection 44.

Dans le cas d'une interdiction de conduite du véhicule (BR = "1"), une signalisation 45 est par exemple actionnée par le transistor 1241. Une temporisation 46 fixe la durée de cette signalisation.

Dans le cas d'une conduite limitée (BO = "1"), le transistor 1242a actionne par exemple un relais 47 qui d'une part active la signalisation 45 à travers un premier contact 470 du relais et d'autre part coupe temporairement le circuit d'allumage 41 à travers un second contact 471 du relais (ou l'alimentation de carburant au moyen d'un autre contact 472). Une autre solution montrée en bas de la figure 3 est par exemple de disposer d'un électrovérin 48 pour limiter mécaniquement la course de la pédale d'accélérateur 49 du véhicule. L'électrovérin 48 est alimenté lorsque le transistor 1242b est passant (LM = "1").

## Revendications

**1 -** Dispositif de sécurité anti-alcool pour l'équipement de machines telles que véhicules, comprenant des moyens (11) pour détecter ion niveau d'intoxication (TXA) d'un utilisateur, et des moyens (12,3,4) pour contrôler l'utilisation d'une machine sous surveillance dans le cas ou le niveau détecté est supérieur à un seuil prédéterminé (TXA>SAmin, BO ou BR=1), caractérisé en ce qu'il comprend des moyens (126,1200,1200a,1201) pour autoriser une utilisation de ladite machine quel que soit ledit niveau détecté lorsque des conditions déterminées sont satisfaites.

**2 -** Dispositif de sécurité conforme à la revendication 1, caractérisé en ce que lesdits moyens pour autoriser comprennent des premiers moyens (1200) de durée d'action non limités pour autoriser l'utilisation de machine, et en ce que la satisfaction desdites conditions déterminées inclut la possession desdits premiers moyens par l'utilisateur.

**3 -** Dispositif de sécurité conforme à l'une quelconque des revendications 1 ou 2, caractérisé en ce que les moyens pour autoriser comprennent des seconds moyens de durée d'action limitée (1201,TEMPO1) et d'accès libre pour autoriser l'utilisation de la machine, et en ce que la satisfaction desdites conditions déterminées inclut la non-utilisation desdits seconds moyens depuis au moins une durée prédéterminé (TEMPO2).

**4 -** Dispositif de sécurité conforme à l'une quelconque des revendications 1 à 3, caractérisé en ce que les moyens pour contrôler comprennent des moyens (121;122:BV,BO,BR,LM1,LM2;125) pour graduer l'emprise limitative du dispositif sur le fonctionnement de la machine et cela en fonction du niveau d'intoxication de l'utilisateur (TXA<SAmin, SAmax>TXA>SAmin, TXA>SAmax).

**5 -** Dispositif de sécurité conforme à l'une quelconque des revendications 1 à 4, caractérisé en ce que les moyens pour contrôler comprennent plusieurs moyens actionneurs (124,3) pour contrôler le fonctionnement de la machine à travers au moins un élément de maitrise du fonctionnement (40,41,circuit carburant, 49...).

**6 -** Dispositif de sécurité conforme à l'une quelconque des revendications 1 à 5, caractérisé en ce qu'il comprend des moyens (BR, LM1, LM2, 1241, 1242a, 45, 46, 47) pour émettre une signalisation en fonction du niveau d'intoxication détecté de l'utilisateur (BR=1) et de la limitation du fonctionnement de la machine (LM1,1242a) sous l'emprise du dispositif.

**7 -** Dispositif de sécurité conforme à l'une quelconque des revendications 1 à 6, caractérisé en ce que les moyens pour contrôler comprennent des moyens (120, 122, TE, CM) pour autoriser une et plusieurs détections successives dudit niveau (TXA) par le même utilisateur et des utilisateurs différents quel que soit l'état de fonctionnement de la machine.

**8 -** Dispositif de sécurité conforme à l'une quelconque des revendications 1 à 7, caractérisé en ce que les moyens de contrôle incluent des moyens (122,écriture de BV,BO,BR => RRm=0) pour interdire tout changement d'état vers un niveau d'emprise différent lorsque la machine est en cours de fonctionnement (RRm=1).

**9 -** Dispositif de sécurité conforme à l'une quelconque des revendications 1 à 8, caractérisé en ce que les moyens pour contrôler comprennent des moyens actionneurs tels que électrovanne (42) pour maitriser le fonctionnement d'une machine sous surveillance telle que véhicule à travers un élément de maitrise dudit fonctionnement tel que le circuit d'alimentation en carburant.

**10 -** Dispositif de sécurité conforme à l'une quelconque des revendications 1 à 9, caractérisé en ce qu'il comprend différents moyens (connexion allume-cigare, 21, 22) pour faciliter son installation et son confort d'utilisation tels que des moyens d'alimentation à travers une prise dite allume-cigare de la machine-véhicule et des moyens substitutifs (21) de ladite prise, et des moyens de communication machine-homme (13) équipés notamment d'éléments lumineux et sonores (130, 131, 132) et de fonctionnalités de transmission de messages tels que ceux à syhnthèse vocale.
